# FASCICULE DE BREVET EUROPEEN

(11) **EP 2 891 825 B1**
(45) Date de publication et mention de la délivrance du brevet: **21.06.2017**
(21) Numéro de dépôt: 14184504.0
(22) Date de dépôt: 11.09.2014
(51) Int. Cl.: F16H 25/20, F16H 25/24, F16F 9/18, F15B 15/22

(54) **Actionneur téléscopique**
Teleskopstellglied
Telescopic actuator

(30) Priorité: 13.09.2013 FR 1358836
(43) Date de publication de la demande: 08.07.2015
(73) Titulaire: Safran Landing Systems, 78140 Vélizy-Villacoublay (FR)
(72) Inventeur: Moretti, Nicolas, 78140 VELIZY-VILLACOUBLAY (FR); Meziane, Sébastien, 78140 VELIZY-VILLACOUBLAY (FR); Balducci, Gérard, 78140 VELIZY-VILLACOUBLAY (FR)
(74) Mandataire: Parzy, Benjamin Alain

(56) Documents cités:
- EP-A1- 2 025 852
- WO-A1-2006/056039
- WO-A2-2011/130863
- DE-A1-102010 036 036
- FR-A1- 2 530 763

## Description

L'invention concerne un actionneur télescopique comportant des moyens d'amortissement hydraulique.

### ARRIERE PLAN DE L'INVENTION

On connaît des actionneurs électromécaniques télescopiques comportant un corps définissant une cavité cylindrique et une tige montée à coulissement télescopique dans la cavité cylindrique, et comportant des moyens d'amortissement hydraulique pour amortir un enfoncement de la tige.

Il est connu, pour réaliser ces moyens d'amortissement hydraulique, de définir dans le corps de l'actionneur une première chambre étanche s'étendant dans le creux de la tige et une deuxième chambre étanche s'étendant dans le reste de la tige et du corps, les deux chambres contenant un fluide hydraulique. L'amortissement hydraulique est réalisé par la mise en oeuvre d'un laminage du fluide sur la sortie de la chambre dont le fluide est expulsé.

Les deux chambres étanches sont alors reliées à un accumulateur doté de moyens de régulation du fluide destiné à maintenir le fluide sous pression et servant également de réserve de fluide.

Dans un tel actionneur, il est donc nécessaire de munir la tige d'un raccord hydraulique et d'utiliser un tuyau flexible pour relier la tige à l'accumulateur, ce qui présente un certain nombre d'inconvénients, notamment en terme de robustesse, d'encombrement, et de masse générale de l'actionneur. Le document EP 2 025 852 Al divulgue un actionneur télescopique tel que décrit dans le préambule de la revendication 1.

### OBJET DE L'INVENTION

L'invention vise à concevoir un actionneur télescopique muni de moyens d'amortissement hydraulique qui soit à la fois plus robuste, moins volumineux et moins lourd que les actionneurs du même type connus.

### RESUME DE L'INVENTION

En vue de la réalisation de ce but, on propose un actionneur télescopique comportant :
- un corps d'actionneur définissant une première cavité cylindrique d'axe longitudinal ;
- une tige montée à coulissement télescopique dans la première cavité cylindrique selon l'axe longitudinal ;
- un écrou solidaire de la tige ;
- une vis mère montée dans la première cavité cylindrique pour s'étendre et tourner selon l'axe longitudinal et coopérer avec l'écrou de sorte qu'une rotation de la vis mère entraîne un déplacement télescopique de la tige dans la première cavité cylindrique ;
- des moyens d'entraînement de la vis mère en rotation ;
- un piston fixe comportant une première queue qui s'étend dans la vis mère et une tête de piston, ladite tête de piston coopérant à étanchéité avec une paroi interne de la tige pour définir entre la tête et un fond de la tige une première chambre de volume variable lors du déplacement de la tige. Selon l'invention, l'actionneur comporte un premier canal de communication hydraulique s'étendant au travers de la première queue pour mettre en communication fluidique la première chambre avec une source de fluide hydraulique, et le canal comporte des premiers moyens d'amortissement adaptés à freiner la tige lors d'un enfoncement de celle-ci en régulant un débit de fluide hydraulique dans le premier canal provoqué par l'enfoncement de la tige.

Ainsi, une admission et une évacuation du fluide hydraulique dans la première chambre sont effectuées au travers du canal de communication et ne nécessitent donc pas de relier la tige coulissante de l'actionneur à un accumulateur : l'utilisation d'un tuyau flexible s'étendant à l'extérieur de l'actionneur n'est donc plus requise, ce qui permet d'améliorer la robustesse de l'actionneur et de diminuer son encombrement et sa masse. De plus, dans l'actionneur de l'invention, seule la première chambre est remplie de fluide hydraulique. Le reste de l'actionneur ne contient donc pas de fluide hydraulique, ce qui réduit encore la masse dudit actionneur.

### BREVE DESCRIPTION DES DESSINS

L'invention sera mieux comprise à la lumière de la description qui suit en référence aux figures des dessins annexés parmi lesquelles :
- la figure 1 est une vue en coupe d'un actionneur télescopique de l'invention dont la tige est dans une position intermédiaire ;
- la figure 1a représente un agrandissement local de la figure 1 ;
- la figure 2 est une vue en coupe de l'actionneur télescopique de l'invention lorsque la tige est dans une position étendue ;
- la figure 3 est une vue en coupe de l'actionneur télescopique de l'invention lorsque la tige est dans une position rétractée.

### DESCRIPTION DETAILLEE DE L'INVENTION

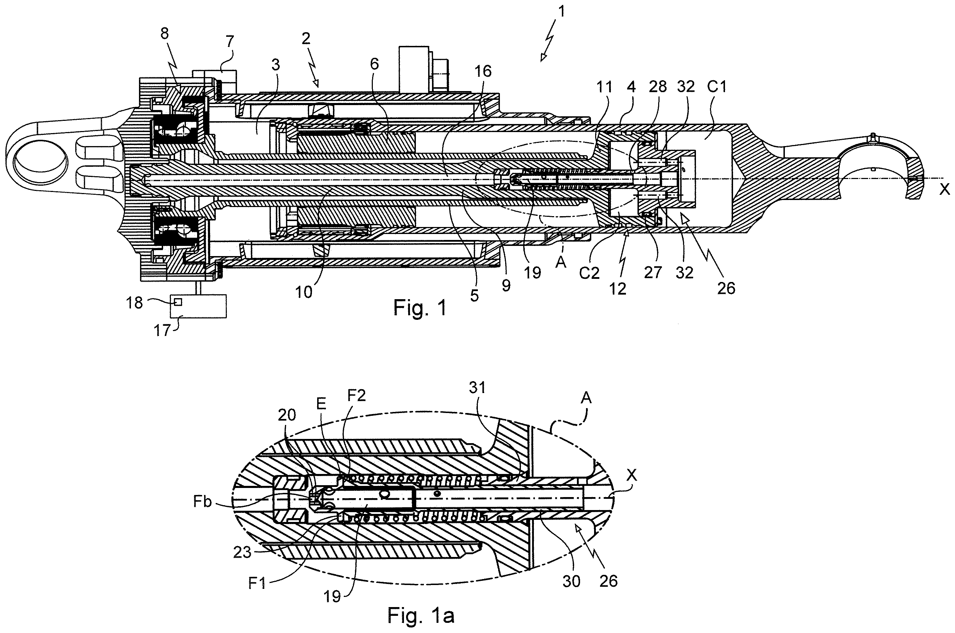

En référence aux figures 1 à 3, l'actionneur télescopique 1 de l'invention comporte un corps d'actionneur 2 définissant une première cavité cylindrique 3 d'axe longitudinal X dans laquelle une tige 4 est montée à coulissement télescopique selon l'axe longitudinal X. Des moyens d'anti-rotation empêchent la tige de pivoter par rapport au corps d'actionneur 2.

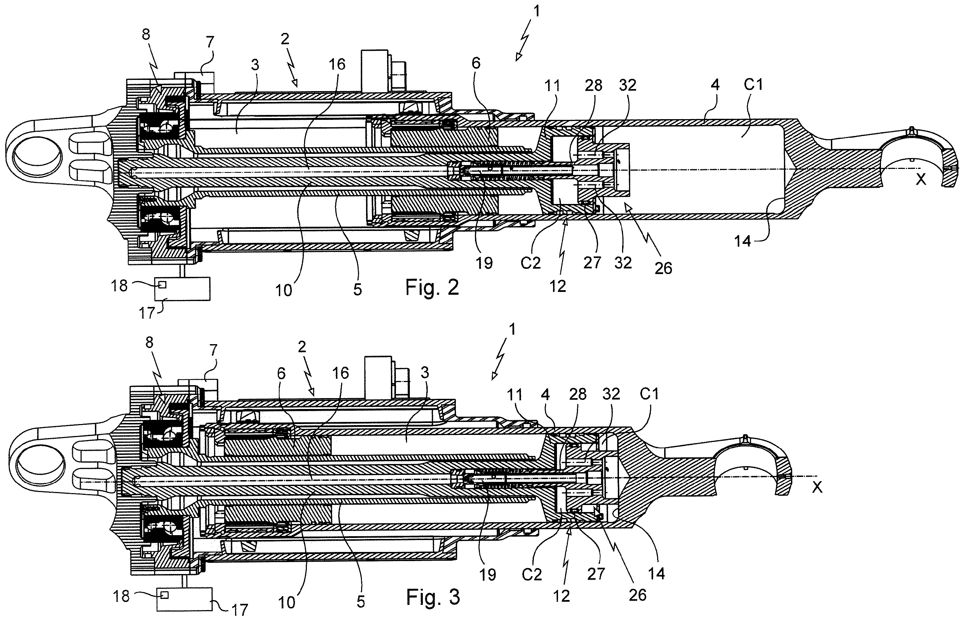

Une vis mère creuse 5 s'étend selon l'axe X à l'intérieur de la première cavité cylindrique 3 et est montée pour tourner selon l'axe X. La vis mère 5 est filetée extérieurement pour coopérer avec un écrou 6 solidaire de la tige 4. Ainsi, une rotation de la vis mère 5 provoque un déplacement axial de la tige 4 vers une position dite « étendue » visible sur la figure 2, dans laquelle un enfoncement de la tige 4 dans le corps d'actionneur 2 est minimal, ou vers une position dite « rétractée » visible sur la figure 3, dans laquelle l'enfoncement de la tige 4 dans le corps d'actionneur 2 est maximal.

L'entraînement de la vis mère 5 en rotation est ici assuré au moyen d'un moteur électrique 7 qui entraîne, via un réducteur 8, un arbre d'entraînement ayant une extrémité cannelée coopérant avec des cannelures homologues de la vis mère. Le moteur pourrait aussi être un moteur hydraulique.

L'actionneur comporte un piston fixe 9 comportant une première queue 10 fixée à un fond du corps d'actionneur 2 et une tête 11 de piston. La première queue 10 s'étend à l'intérieur de la vis mère 5 le long de l'axe X. La tête 11 coopère à étanchéité avec une paroi interne de la tige 4 grâce à des joints 12. La tête 11 du piston fixe 9 définit ainsi entre un fond 14 de la tige 4 et la tête 11 une première chambre C1 de volume variable lors du déplacement de la tige 4. Le volume de la première chambre C1 est ainsi maximal lorsque la tige 4 est en position étendue et minimal lorsque la tige 4 est en position rétractée.

Dans l'actionneur 1 de l'invention, un premier canal de communication hydraulique 16 s'étend au travers de la première queue 10 pour mettre en communication fluidique la première chambre C1 avec une source de fluide hydraulique, en l'occurrence avec un accumulateur hydraulique 17. L'accumulateur hydraulique 17, représenté schématiquement sur les figures 1 à 3, comporte des moyens de mise sous pression 18 du fluide hydraulique, lesdits moyens de mise sous pression comprenant par exemple une membrane flexible sur laquelle agit une quantité constante de gaz. Les moyens de mise sous pression 18 ont pour but de maintenir sous pression le fluide hydraulique dans la première chambre C1 et dans le premier canal de communication 16, ce qui permet d'éviter toute cavitation. L'accumulateur 17 sert également de réserve de fluide.

Le premier canal de communication 16 comporte des premiers moyens d'amortissement adaptés à freiner la tige 4 lors d'un enfoncement de celle-ci en régulant un débit de fluide hydraulique dans le premier canal 16 provoqué par l'enfoncement de la tige 4 : les premiers moyens d'amortissement sont donc actifs lorsque la tige passe de la position étendue à la position rétractée.

Les premiers moyens d'amortissement comportent ici des moyens de restriction adaptés à laminer le fluide hydraulique lors de l'évacuation de celui-ci de la première chambre C1 lorsque la tige 4 s'enfonce dans le corps d'actionneur 2. Le fluide hydraulique est donc laminé lors de son passage de la première chambre C1 vers l'accumulateur 17 via le premier canal de communication 16.

Les moyens de restriction comportent un clapet 19 disposé dans le premier canal 16, dont le rôle est, d'une part, de laminer le fluide hydraulique lors d'une rétraction de la tige 4, et d'autre part, de s'ouvrir pour laisser passer le fluide hydraulique avec le moins de pertes de charges possible lors d'une extension de la tige 4.

Pour assurer le laminage du fluide hydraulique, le clapet 19 comporte deux trous calibrés 20, à travers desquels le fluide hydraulique est amené à s'écouler lors d'un enfoncement de la tige 4.

Le clapet 19 est de plus adapté à s'ouvrir pour admettre du fluide dans la première chambre C1 lors d'une extension de la tige 4. Une surpression sur la face de bouchage Fb du clapet exercée par le fluide hydraulique cheminant dans le premier canal de communication 16 depuis l'accumulateur 17 jusqu'à la première chambre C1 repousse le clapet 19 et permet l'admission du fluide avec un minimum de perte de charge, pour éviter toute cavitation dans le canal de communication 16 lorsque de l'extension de la tige 4.

Un ressort 25 s'étend dans le canal de communication 16 et comporte une extrémité appuyée sur la collerette 23 du clapet 19. Le ressort 25 se comprime lorsque la surpression survient lors de l'admission du fluide dans la première chambre C1 provoquant l'ouverture du clapet 19, et revient à sa position normale lorsque la surpression disparaît, ce qui ramène le clapet 19 dans la position dans laquelle il bouche le premier canal de communication 16.

En outre, on note que le ressort 25 est taré pour maintenir le clapet en position fermé en cas de vibration de l'actionneur.

En plus des premiers moyens d'amortissement, l'actionneur de l'invention comporte des deuxièmes moyens d'amortissement de la tige 4 adaptés à freiner la tige 4 en fin d'enfoncement.

Les deuxièmes moyens d'amortissement comportent un piston coulissant 26 coopérant à étanchéité avec une paroi interne de la tête 11 du piston fixe 9. Le piston coulissant 26 est équipé d'un joint 27 pour assurer cette étanchéité. Le piston coulissant 26 définit ainsi entre la tête 11 et le fond du piston coulissant 26 une deuxième chambre C2.

Le piston coulissant 26 est agencé de sorte qu'en fin de course, le fond de la tige 4 vienne buter contre le piston coulissant 26 forçant celui-ci à s'enfoncer dans la tête 11 du piston fixe 9 et provoquant ainsi l'évacuation du fluide hydraulique de la deuxième chambre C2. Cette évacuation du fluide est réalisée au travers d'un deuxième canal de communication 28 ménagé dans le piston coulissant 26, qui met en communication fluidique la deuxième chambre C2 avec le premier canal de communication 16. Le volume de la deuxième chambre C2 est ainsi maximal en permanence sauf lorsque la tige 4 arrive en fin de course et bute contre le piston coulissant 26. Le volume de la deuxième chambre est alors réduit jusqu'à ce que la tige 4 arrive en position rétractée, dans laquelle le volume de la deuxième chambre C2 est minimal.

Les deuxièmes moyens d'amortissement comprennent des moyens de bouchage progressif du deuxième canal 28 au cours de l'enfoncement du piston coulissant 26 dans la tête 11 du piston fixe 9, lesdits moyens de bouchage progressif comportant en l'occurrence une chemise 30 s'étendant dans une deuxième queue 31 du piston coulissant 26 dans laquelle débouche le canal 28. Ainsi, lorsque le deuxième canal 28 est bouché, le fluide hydraulique contenu dans la deuxième chambre C2 ne peut plus en être évacué que par un jeu annulaire entre la deuxième queue 31, le piston coulissant 26 et la chemise 30, permettant ainsi de ralentir l'enfoncement du piston coulissant 26 en fin de course.

La chemise 30 est ici solidaire du clapet 19, qui est appuyé sur la chemise 30. La chemise 30 est ajustée avec un faible jeu avec la paroi interne de la deuxième queue 31 du piston coulissant 26, ce qui permet de la maintenir en position latérale tout en autorisant un coulissement de celle-ci dans la deuxième queue 31 du piston coulissant 26 lors de l'ouverture et de la fermeture du clapet 19. La chemise 31 vient obstruer progressivement le deuxième canal 28 lors de l'enfoncement du piston 26 dans la tête 11 du piston fixe 9.

Ainsi, lorsque la tige 4 est en position rétractée, la deuxième chambre C2 est vidée d'une partie du fluide hydraulique qui la remplit normalement. Pour permettre un remplissage de la deuxième chambre C2 de manière à ce que la deuxième chambre C2 puisse remplir sa fonction d'amortissement, le piston comporte au moins un clapet à bille 32, en l'occurrence deux clapets à bille 32 adaptés à s'ouvrir pour admettre du fluide dans la deuxième chambre C2 lors d'une extension de la tige 4.

On décrit maintenant le fonctionnement de l'actionneur 1 de l'invention, et notamment la manière dont fonctionnent les moyens d'amortissement lors d'un enfoncement ou d'une extension de la tige 4.

Au moment d'un enfoncement de la tige 4, le fond 14 de la tige 4 repousse le fluide hydraulique contenu dans la première chambre C1 dans le premier canal de communication 16. Le fluide hydraulique s'écoule au travers des deux orifices calibrés 20 du clapet 19, chemine dans le premier canal 16 de communication en direction de l'accumulateur 17, et remplit l'accumulateur. Au moment de son écoulement au travers des deux orifices calibrés 20, le fluide est laminé, ce qui réduit son débit, donc freine la tige 4 et permet de gérer la vitesse d'enfoncement.

Lorsque la tige 4 arrive en fin d'enfoncement, elle vient buter contre le piston coulissant 26 qui coulisse vers le fond de la tête 11 du piston fixe 9. Le fluide hydraulique contenu dans la deuxième chambre C2 s'oppose au coulissement du piston 26, ce qui freine la tige 4 qui est donc amortie en fin d'enfoncement. Le fluide hydraulique est évacué de la deuxième chambre C2 via le deuxième canal de communication 28 jusqu'au bouchage du deuxième canal de communication 28 par la chemise 31. Une fois le canal de communication 28 bouché, le fluide hydraulique s'écoule vers le canal de communication 16 via le jeu annulaire entre la chemise 30 et la deuxième queue 31 du piston coulissant 26 jusqu'à l'arrêt complet de la tige 4.

Au moment d'une extension de la tige 4, le volume de la première chambre C1 augmente et les moyens de mise sous pression 18 de l'accumulateur hydraulique 17 agissent pour remplir de fluide hydraulique la première chambre C1. Le fluide hydraulique chemine alors au travers du canal de communication 16, repousse le clapet 19 et remplit la première chambre C1 ce qui permet de réactiver les premiers moyens d'amortissement. La deuxième chambre C2, quant à elle, est remplie de fluide hydraulique qui est admis dans la deuxième chambre C2 au travers des clapets à bille 32, ce qui permet de réactiver les deuxièmes moyens d'amortissement. En remplissant la deuxième chambre C2, le fluide hydraulique repousse le piston coulissant 26 contre une rondelle 33 solidaire de la tête 11 du piston fixe 9, le piston coulissant 26 étant maintenu dans une position dans laquelle la deuxième chambre C2 a un volume maximal.

Il est intéressant de noter enfin que l'amortissement en rétraction mis en oeuvre par l'actionneur télescopique de l'invention est disponible que l'actionneur soit actif ou non.

L'invention n'est pas limitée au mode de réalisation particulier qui vient d'être décrit, mais, bien au contraire, englobe toute variante entrant dans le cadre de l'invention tel que défini par les revendications.

## Revendications

1. Actionneur télescopique comportant :
- un corps d'actionneur (2) définissant une première cavité cylindrique (3) d'axe longitudinal (X) ;
- une tige (4) montée à coulissement télescopique dans la première cavité cylindrique (3) selon l'axe longitudinal (X) ;
- un écrou (6) solidaire de la tige (4) ;
- une vis mère (5) creuse montée dans la première cavité cylindrique (3) pour s'étendre et tourner selon l'axe longitudinal (X) et coopérer avec l'écrou (6) de sorte qu'une rotation de la vis mère (5) entraîne un déplacement télescopique de la tige (4) dans la première cavité cylindrique (3) ;
- des moyens d'entraînement de la vis mère en rotation ;
- un piston fixe (9) comportant une première queue (10) qui s'étend dans la vis mère (5) et une tête (11) de piston, ladite tête (11) de piston coopérant à étanchéité avec une paroi interne de la tige pour définir entre la tête et un fond de la tige une première chambre (C1) de volume variable lors du déplacement de la tige ;
**caractérisé en ce que** l'actionneur comporte un premier canal de communication hydraulique (16) s'étendant au travers de la première queue (10) pour mettre en communication fluidique la première chambre (C1) avec une source de fluide hydraulique (17), et **en ce que** le canal (16) comporte des premiers moyens d'amortissement adaptés à freiner la tige (4) lors d'un enfoncement de celle-ci en régulant un débit de fluide hydraulique dans le premier canal provoqué par l'enfoncement de la tige.

2. Actionneur télescopique selon la revendication 1, dans lequel les premiers moyens d'amortissement comportent des moyens de restriction adaptés à laminer le fluide hydraulique lors de l'évacuation de celui-ci de la première chambre lorsque la tige s'enfonce dans le corps.

3. Actionneur télescopique selon la revendication 2, dans lequel les moyens de restriction comportent un clapet (19) disposé dans le premier canal pour boucher celui-ci et s'ouvrir en réponse à une surpression dans la première chambre lors d'un enfoncement de la tige (4).

4. Actionneur télescopique selon la revendication 3, dans lequel le clapet est taré et adapté à s'ouvrir pour admettre du fluide dans la première chambre lors d'une extension de la tige (4).

5. Actionneur télescopique selon l'une des revendications précédentes, comportant en outre des deuxièmes moyens d'amortissement de la tige (4) adaptés à freiner la tige (4) en fin d'enfoncement.

6. Actionneur télescopique selon la revendication 5, dans lequel les deuxièmes moyens d'amortissement comportent un piston coulissant (26) coopérant à étanchéité avec une paroi interne de la tête (11) du piston fixe (9) pour définir entre la tête (11) et le fond du piston coulissant (26) une deuxième chambre (C2), un deuxième canal de communication (28) étant ménagé dans le piston coulissant (26) pour mettre en communication fluidique la deuxième chambre (C2) avec le premier canal de communication (16), le piston coulissant (26) étant agencé de sorte qu'en fin de course, le fond de la tige vienne buter contre le piston coulissant forçant celui-ci à s'enfoncer dans la tête (11) et provoquant ainsi l'évacuation du fluide hydraulique contenu dans la deuxième chambre par le deuxième canal de communication.

7. Actionneur télescopique selon la revendication 6, dans lequel les deuxièmes moyens d'amortissement comprennent des moyens de bouchage progressif (30) du deuxième canal au cours de l'enfoncement du piston coulissant dans la tête (11).

8. Actionneur télescopique selon la revendication 7, dans lequel les moyens de bouchage progressif comportent une chemise (30) ajustée avec un faible jeu contre une paroi interne d'une deuxième queue (31) du piston coulissant (26) dans laquelle débouche le deuxième canal, la chemise (30) venant obstruer progressivement le deuxième canal lors de l'enfoncement du piston coulissant dans la tête (11).

9. Actionneur télescopique selon la revendication 7, dans lequel le piston coulissant (26) comporte au moins un clapet à bille (32) adapté à s'ouvrir pour admettre du fluide dans la deuxième chambre lors d'une extension de la tige.

## Patentansprüche

1. Teleskopaktor, umfassend:
- ein Aktorgehäuse (2), das einen ersten zylindrischen Hohlraum (3) mit einer Längsachse (X) definiert;
- eine Stange (4), die in dem ersten zylindrischen Hohlraum (3) entlang der Längsachse (X) teleskopisch verschiebbar gelagert ist;
- eine Mutter (6), die fest mit der Stange (4) verbunden ist;
- eine hohle Leitspindel (5), die in dem ersten zylindrischen Hohlraum (3) gelagert ist, um sich entlang der Längsachse (X) zu erstrecken und sich um dieselbe zu drehen und um mit der Mutter (6) derart zusammenzuwirken, dass eine Drehung der Leitspindel (5) eine Teleskopverschiebung der Stange (4) in dem ersten zylindrischen Hohlraum (3) verursacht;
- Antriebsmittel zum Drehantrieb der Leitspindel;
- einen ortsfesten Kolben (9), der ein erstes Ende (10) umfasst, das sich in der Leitspindel (5) erstreckt, sowie einen Kolbenkopf (11), wobei der Kolbenkopf (11) auf dichte Weise mit einer Innenwand der Stange zusammenwirkt, um zwischen dem Kopf und einem Boden der Stange eine erste Kammer (C1) mit variablem Volumen während der Verschiebung der Stange zu definieren;
**dadurch gekennzeichnet, dass** der Aktor einen ersten hydraulischen Verbindungskanal (16) umfasst, der sich durch das erste Ende (10) erstreckt, um die erste Kammer (C1) mit einer Hydraulikfluidquelle (17) in Fluidverbindung zu bringen, und dass der Kanal (16) erste Dämpfungsmittel umfasst, die dazu geeignet sind, die Stange (4) während eines Eindrückens derselben zu bremsen, indem eine durch das Eindrücken der Stange verursachte Hydraulikfluiddurchflussmenge in dem ersten Kanal reguliert wird.

2. Teleskopaktor nach Anspruch 1, bei dem die ersten Dämpfungsmittel Drosselmittel umfassen, die dazu geeignet sind, das Hydraulikfluid während des Abführens desselben aus der ersten Kammer zu drosseln, wenn die Stange in das Gehäuse gedrückt wird.

3. Teleskopaktor nach Anspruch 2, bei dem die Drosselmittel ein Ventil (19) umfassen, das in dem ersten Kanal angeordnet ist, um diesen zu verschließen und sich in Antwort auf einen Überdruck in der ersten Kammer während eines Eindrückens der Stange (4) zu öffnen.

4. Teleskopaktor nach Anspruch 3, bei dem das Ventil tariert und dazu geeignet ist, sich zu öffnen, um bei einem Ausfahren der Stange (4) Fluid in die erste Kammer einströmen zu lassen.

5. Teleskopaktor nach einem der vorhergehenden Ansprüche, ferner umfassend zweite Dämpfungsmittel zum Dämpfen der Stange (4), die dazu geeignet sind, die Stange (4) am Ende des Eindrückens zu bremsen.

6. Teleskopaktor nach Anspruch 5, bei dem die zweiten Dämpfungsmittel einen verschiebbaren Kolben (26) umfassen, der auf dichte Weise mit einer Innenwand des Kopfes (11) des ortsfesten Kolbens (9) zusammenwirkt, um zwischen dem Kopf (11) und dem Boden des verschiebbaren Kolbens (26) eine zweite Kammer (C2) zu definieren, wobei ein zweiter Verbindungskanal (28) in dem verschiebbaren Kolben (26) ausgebildet ist, um die zweite Kammer (C2) mit dem ersten Verbindungskanal (16) in Fluidverbindung zu bringen, wobei der verschiebbare Kolben (26) so ausgebildet ist, dass am Ende des Hubes der Boden der Stange an dem verschiebbaren Kolben anstoßen wird und diesen zwingt, sich in den Kopf (11) hineinzudrücken, und so das Abführen des in der zweiten Kammer enthaltenen Hydraulikfluids über den zweiten Verbindungskanal verursacht.

7. Teleskopaktor nach Anspruch 6, bei dem die zweiten Dämpfungsmittel Mittel (30) zum progressiven Verschließen des zweiten Kanals während des Eindrückens des verschiebbaren Kolbens in den Kopf (11) umfassen.

8. Teleskopaktor nach Anspruch 7, bei dem die Mittel zum progressiven Verschließen einen Mantel (30) umfassen, der mit geringem Spiel gegen eine Innenwand einer zweiten Stange (31) des verschiebbaren Kolbens (26) eingepasst ist, in das der zweite Kanal mündet, wobei der Mantel (30) den zweiten Kanal während des Eindrückens des verschiebbaren Kolbens in den Kopf (11) fortschreitend blockieren wird.

9. Teleskopaktor nach Anspruch 7, bei dem der verschiebbare Kolben (26) mindestens ein Kugelventil (32) umfasst, das dazu geeignet ist, sich zu öffnen, um während eines Ausfahrens der Stange Fluid in die zweite Kammer einströmen zu lassen.

## Claims

1. Telescopic actuator comprising:
- an actuator body (2) defining a first cylindrical cavity (3) of longitudinal axis (X);
- a rod (4) mounted to slide telescopically in the first cylindrical cavity (3) along the longitudinal axis (X) ;
- a nut (6) securely attached to the rod (4);
- a hollow lead screw (5) mounted in the first cylindrical cavity (3) to extend and rotate on the longitudinal axis (X) and cooperate with the nut (6) such that a rotation of the lead screw (5) results in a telescopic displacement of the rod (4) in the first cylindrical cavity (3);
- means for driving the lead screw in rotation;
- a fixed piston (9) comprising a first tail (10) which extends in the lead screw (5) and a piston head (11), said piston head (11) cooperating in a seal-tight manner with an internal wall of the rod to define, between the head and a bottom of the rod, a first chamber (C1) of variable volume upon the displacement of the rod;
**characterized in that** the actuator comprises a first hydraulic connection channel (16) extending through the first tail (10) to fluidically connect the first chamber (C1) with a source of hydraulic fluid (17), and **in that** the channel (16) comprises first damping means suitable for slowing down the rod (4) when the latter is depressed by regulating a hydraulic fluid flow rate in the first channel provoked by the depression of the rod.

2. Telescopic actuator according to Claim 1, in which the first damping means comprise restriction means suitable for laminating the hydraulic fluid when the latter is discharged from the first chamber when the rod is depressed in the body.

3. Telescopic actuator according to Claim 2, in which the restriction means comprise a check valve (19) arranged in the first channel to block the latter and to open in response to an overpressure in the first chamber when the rod (4) is depressed.

4. Telescopic actuator according to Claim 3, in which the check valve is calibrated and adapted to open to admit fluid into the first chamber when the rod (4) is extended.

5. Telescopic actuator according to one of the preceding claims, further comprising second means for damping the rod (4) suitable for slowing down the rod (4) at the end of depression.

6. Telescopic actuator according to Claim 5, in which the second damping means comprise a sliding piston (26) cooperating in a seal-tight manner with an internal wall of the head (11) of the fixed piston (9) to define, between the head (11) and the bottom of the sliding piston (26), a second chamber (C2), a second connecting channel (28) being formed in the sliding piston (26) to fluidically connect the second chamber (C2) with the first connecting channel (16), the sliding piston (26) being arranged in such a way that, at the end of travel, the bottom of the rod abuts against the sliding piston forcing the latter to be depressed into the head (11) and thus resulting in the discharging of the hydraulic fluid contained in the second chamber via the second connecting channel.

7. Telescopic actuator according to Claim 6, in which the second damping means comprise means (30) for progressively blocking the second channel during the depression of the sliding piston in the head (11).

8. Telescopic actuator according to Claim 7, in which the progressive blocking means comprise a jacket (30) fitted with little play against an internal wall of a second tail (31) of the sliding piston (26) into which the second channel emerges, the jacket (30) progressively obstructing the second channel when the sliding piston is depressed in the head (11).

9. Telescopic actuator according to Claim 7, in which the sliding piston (26) comprises at least one ball valve (32) adapted to open to admit fluid into the second chamber when the rod is extended.
